(19) **Europäisches Patentamt**

**European Patent Office**

**Office européen des brevets**

(11) **EP 1 679 643 A1**

(12) **EUROPEAN PATENT APPLICATION**
published in accordance with Art. 158(3) EPC

(43) Date of publication:
**12.07.2006 Bulletin 2006/28**

(51) Int Cl.:
***G06Q 10/00*** (0000.00)

(21) Application number: **04792960.9**

(22) Date of filing: **26.10.2004**

(86) International application number:
**PCT/JP2004/015839**

(87) International publication number:
**WO 2005/041091 (06.05.2005 Gazette 2005/18)**

(84) Designated Contracting States:
**CH GB IT LI NL**

(30) Priority: **28.10.2003 JP 2003368013**
**20.11.2003 JP 2003391236**
**27.01.2004 JP 2004018872**

(71) Applicant: **KYOCERA CORPORATION**
**Kyoto-shi, Kyoto 612-8501 (JP)**

(72) Inventors:
• **KOBAYASHI, Yoshihiro,**
**c/o KYOCERA CORPORATION**
**Kitami-shi, Hokkaido 0991595 (JP)**

• **TANAKA, Masahiro,**
**c/o KYOCERA CORPORATION**
**Kirishima-shi, Kagoshima, 8994312 (JP)**
• **NISHIMURA, Michiaki,**
**c/o KYOCERA CORPORATION**
**Kirishima-shi, Kagoshima 8994312 (JP)**

(74) Representative: **Banzer, Hans-Jörg**
**Kraus & Weisert**
**Patent- und Rechtsanwälte**
**Thomas-Wimmer-Ring 15**
**80539 München (DE)**

(54) **PARTS SALES SYSTEM**

(57)     a parts marketing system includes: a database unit for storing distribution data of dimensions or characteristics of each lot, and price and delivery date with respect to delivery parts; an input unit for inputting the customer's product specifications and the distribution data of dimensions or characteristics of parts combined by the customer; a simulation unit for retrieving required information from the database unit, based on information from the input unit, and for selecting parts lot having optimal distribution data of dimensions or characteristics using a simulator; and an output unit for indicating an estimation sheet including the distribution data of dimensions or characteristics, the delivery date and the price with respect to the selected optimal parts lot, whereby an estimate can be instantly presented to the customer without restriction of time and place, thereby curtailing cost and delivery date of delivery parts. Ultimately, manufacture cost for assembling in the customer's site can be reduced.

Fig. 1

**Description**

[TECHNICAL FIELD]

The present invention relates to a parts marketing system, which can be applied to parts for commercial products, such as electric or electronic products, or precision parts for, e.g., optical connector.

[BACKGROUND]

In a conventional marketing system for parts for commercial products, such as electric or electronic products, or precision parts (for example, ferrule, sleeve, etc) for optical connector, sales representatives continue dealings by exhibiting parts catalogues, which has been printed beforehand, in making a customer call, in an exhibition or over the counter. Nowadays, there are a lot of systems for advertising parts by displaying a video playback on monitor screen, such as television set. An estimation sheet of parts is handwritten or printed by a printer after operating a word-processor.

In the above conventional system, it would be difficult to make an immediate response because estimation of parts requires adequate experience and need to check inventory status and delivery date.

Hence, proposed is a first prior art of a parts cost estimation system (patent document 1), which is configured of a communication controller 52 connected with a host computer 51 via communication lines; a TV display 59; a video-disk player 58 for displaying still images of a parts catalogue recorded on a video-disk using the TV display 59; a parts master file 54 in which both of information of physical storage location on the video-disk, in which the still images of the parts catalogue are stored in accordance with key index corresponding to parts number of particular parts, and information mainly relevant to the particular parts, including estimate condition, unit price, inventory status and delivery date, are recorded; a display 56 for displaying parts and inventory status, a keyboard input device 55 for operator's instruction and information inputting; a printer 57 for printing estimation sheets or the like; a personal computer unit 53 which, when a parts code specified by customer's request is inputted using the keyboard input device 55, can display a content retrieved in the video-disk using the video-disk player 58 on the TV display 59 and can display parts information required for drafting estimation sheets on the display 56, and, when estimation condition is inputted by the keyboard input device 55 and inventory status relevant to the parts regarding the estimation condition must be checked, can check a inventory master file stored in the host computer system 51 via communication lines to display the result on the display 56, and, when instruction to print estimation sheets is inputted by the keyboard input device 55, can print out the estimation sheets using the printer 57, and, when the estimation sheets secure receipt condition of order and the order information is inputted by the keyboard input device 55, can transmit the information via the communication controller 52 and communication lines to the host computer system 51.

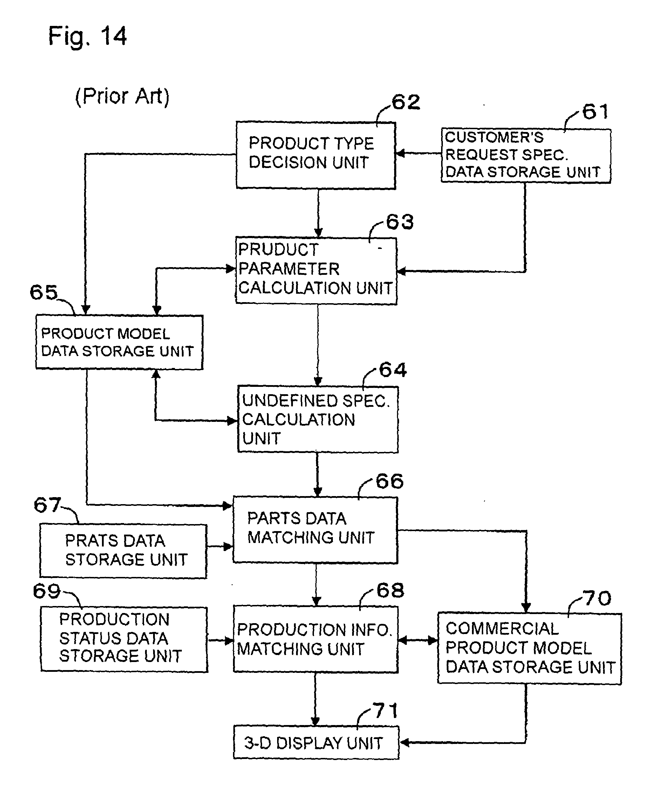

Further, in a second prior art of a design system for accepting order, as shown in Fig. 14, a customer's request specifications data storage unit 61 stores beforehand request specifications of parts which are required by customers. A product type decision unit 62 can select a designated type out of request specifications stored in the customer's request specifications data storage unit 61, and can store it in a product model data storage unit 65. A product parameter calculation unit 63 can decide a specific dimensions and shape parameters of the product based on the type stored in the product model data storage unit 65, in which calculation of the parameters is performed using calculation routines and rule database.

Next, an undefined specifications calculation unit 64 can process items of specifications, which cannot be directly designated by customers or have not been directly designated by customers, using the rule database based on items of specifications which have already designated, and can store default values in the product model data storage unit 65.

Thus, after completing a product model which can satisfy the customer's request specifications, ready-made parts can be selected to suit for constituting the product. A parts data matching unit 66 can select parts, which are more similar to parts required for manufacturing the product, out of a parts data storage unit 67.

As described above, all of the parameter specifications of parts can be decided based on the product model data storage unit 65, and then the dimensions and the shape parameters of the product model in combination with these parts can be also decided. The decided dimensions and shape parameters are stored as product model data in a commercial product model data storage unit 70.

After the commercial product model is thus decided, delivery time and cost of the commercial product will be estimated. A production information matching unit 68 can store the delivery time and cost of the respective commercial products in the commercial product model data storage unit 70, based on parts data supplied from a production status data storage unit 69 and a parts data storage unit 67, and can display them on a three-dimension display unit 71 (patent document 2).

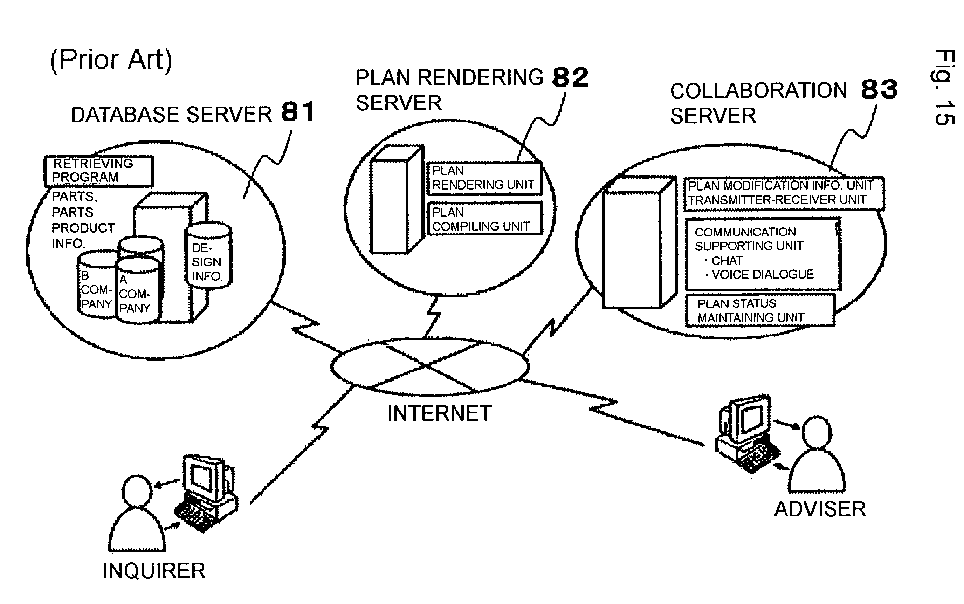

Next, a third prior art of a web collaboration design system is shown in Fig. 15. A database server 81, a plan rendering server 82, a collaboration server 83, and terminals of inquirers and adviser are connected mutually via the Internet. In the database server 81, registered are both of specific information (shape data or the like, of product, parts and members for drafting design drawings) of a plurality of components constituting a design object and design information including information of combination or arrangement of selected components. The database server 81 is also provided with a search engine for searching for these registered data. The plan rendering server 82 is provided with a plan rendering unit and a plan compiling unit, which can be freely downloaded and used by anyone who is connected to the Internet. The collaboration server 83 is provided with a plan modification information transmitter-receiver unit, a communication supporting unit and a plan status maintaining unit, which can control a plan which is being designed currently, and can control participants of design plan by plan, and can communicate information bi-directionally, and can maintain a current status of plans.

The participants of design can connect with the collaboration server 83 to make an entry of design after selecting design of plan to be participated. For example, for each of the participants who intend to design plans using the present system, a password and a plan name are set, and they can make entries on each screen for entry of design.

Each of participants of design is individually authenticated by inputting his username, plan name for entry, and his password on this screen. In a case of entry to a group which can perform collaboration design on the net, the current status of design is automatically transferred from the plan status maintaining unit in the collaboration server 83 to allow the entry to design. Hence, the collaboration server 83 always maintains the current status of design.

A browser downloaded on each terminal is provided with both storing function and reading function for a draft of design, wherein the current status can be uploaded and stored into a second database (draft of design) in the database server 81 by operating a button or a key for storage. Further, as described above, the plan status maintaining unit in the collaboration server 82 maintains the current status of design at that time. In order to restart compiling of design, after making an entry on a screen for entry of design, the draft of design which has been stored previously can be displayed on the plan rendering unit using the plan reading function.

Further, there may be usage of interactive transaction type, in which each client can download and use application software (chat function, voice dialogue function, etc) for the communication supporting unit registered in the collaboration server 82.

The database server 81 is not necessarily located in a single site. Commercial products supplied by a plurality of companies can retrieved by linking databases on the net registered with a common format, such as XML. Further, other database with another format can be utilized by registering a converter into a common format on the database server (patent document 3).

[PATENT DOCUMENT 1] JP-63-12068(1988), A
[PATENT DOCUMENT 2] JP-4-77861(1993), A
[PATENT DOCUMENT 3] JP-2001-195438(2001), A

[DISCLOSURE OF THE INVENTION]

[PROBLEM TO BE SOLVED BY THE INVENTION]

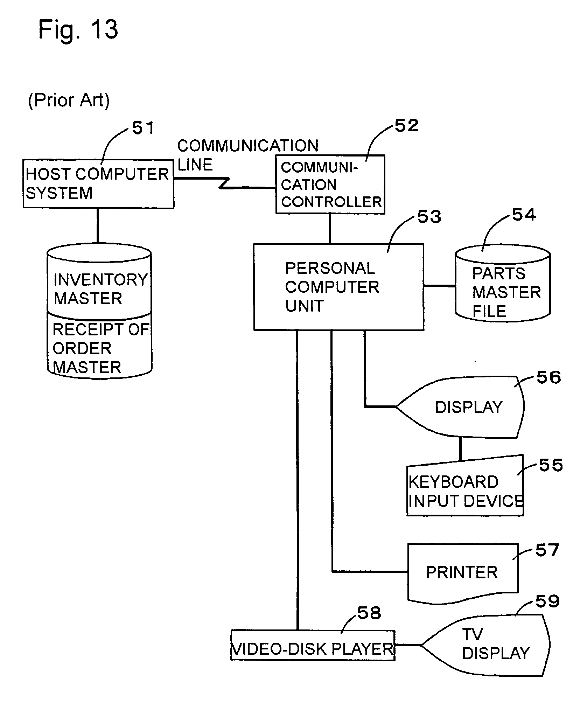

In the first prior art shown in Fig. 13, however, only ready-made parts are displayed. This system gives no consideration to increasingly diverse needs of customers, and has no capability to accept orders of parts which can satisfy customers' diverse request.

Further, in the second prior art shown in Fig. 14, calculation process is vexatiously complicated. The system is provisionally optimized by processing a part that is not designated by a customer using rule database, thereby narrowing it down to some extent. But it is not crucial and may not coincide with customer's request, hence, redesign or re-estimate is required in case by case. Furthermore, this design system is proposed for a model aircraft as individual product design for a single article. Therefore, it would be difficult that this system is applied to commercial products, such as electric or electronic products.

Further, in the third prior art shown in Fig. 15, design and estimate can be performed in real time using a web. However, this system is proposed for housing or furniture as individual product design for a single article. Therefore, it would be difficult that this system is applied to commercial products, such as electric or electronic products.

In each system according to the first to third prior arts, parts or products for delivery can designed, selected or estimated based on customers' request. But each of systems cannot be applied to commercial products, such as electric or electronic products, or parts for an optical connector. Accordingly, when the customers design parts to be purchased, they are likely to take tolerance of product in dimensions or characteristics in the worst case into account to place an order of the parts. This may cause an excess request with a margin sufficient for the parts, thereby resulting in increased costs in assembling products in customers' sites.

Further, in each system according to the first to third prior arts, parts or products having predefined tolerance in characteristics or dimensions are delivered in bulk. Hence, the customers have to assemble the delivered parts or products under the same condition, thereby resulting in increased costs of final products in assembling in customers' sites.

It is an object of the present invention to provide a parts marketing system, which, on demand of a customer, can instantly select and propose parts lot having optimal distribution data of dimensions or characteristics, without restriction of time and place.

[MEANS FOR SOLVING THE PROBLEM]

A parts marketing system for designing and selling parts based on customer's product specifications, according to the present invention, selects and sells parts lot having optimal distribution data of dimensions or characteristics, based on both of customer's product specifications and distribution data of dimensions or characteristics of parts combined by the customer.

It is preferable in the present invention that at least one boundary value is defined between an ideal value of either characteristic parameter or dimension parameter of parts and a tolerance limit value, and then parts are classified by the ideal value, the tolerance limit value and the boundary value, to deliver the parts to the customer.

Further, it is preferable in the present invention that the boundary value is defined between a neighboring region closer to the ideal value of either characteristic parameter or dimension parameter of parts and a remote region residing in tolerance but apart from the ideal value, and then the parts are classified by the neighboring region and the remote region to deliver the parts to the customer.

Furthermore, it is preferable in the present invention that the system includes:

a database unit for storing distribution data of dimensions or characteristics of each lot, and price and delivery date with respect to delivery parts;
an input unit for inputting the customer's product specifications and the distribution data of dimensions or characteristics of parts combined by the customer;
a simulation unit for retrieving required information from the database unit, based on information from the input unit, and for selecting parts lot having optimal distribution data of dimensions or characteristics using a simulator; and
an output unit for indicating an estimation sheet including the distribution data of dimensions or characteristics, the delivery date and the price with respect to the selected optimal parts lot.

Further, it is preferable in the present invention that the input unit and the output unit are provided in the same workstation unit.

Further, it is preferable in the present invention that, in a case of lacking appropriate information in the database unit, acceptable information of the parts lot is registered from a production management unit into the database unit.

Further, it is preferable in the present invention that at least two out of the database unit, the input unit, the simulation unit, the output unit and the production management unit are capable of communicating information through an internet unit with each other.

Further, it is preferable in the present invention that at least two out of the database unit, the input unit, the simulation unit and the output unit are provided in the same machine.

Further, it is preferable in the present invention that the simulator simulates distribution of dimension parameter or characteristic parameter of the delivery parts, based on both of distribution of dimensions or characteristics of the customer's product and distribution data of dimension parameter or characteristic parameter of the parts combined by the customer.

Further, it is preferable in the present invention that the simulator utilizes at least one of Monte Carlo simulation and addition theorem of variance.

Further, it is preferable in the present invention that the parts combined by the customer are optical fibers, and the parts to be designed and sold are at least one of ferrules and sleeves.

Further, it is preferable in the present invention that the characteristic parameter or the dimension parameter of the parts is at least one of concentricity and inner diameter of the ferrule.

Further, it is preferable in the present invention that the classified parts residing in each of the neighboring region and the remote region are baled in a different package, respectively.

Further, it is preferable in the present invention that the different package has a different color of a package case.

[EFFECT OF THE INVENTION]

According to the present invention as described above, parts lot having optimal distribution data of dimensions or characteristics with respect to delivery parts can be selected and proposed based on both of request specifications of product which is assembled by the customer and distribution data of dimensions or characteristics of parts which are owned by the customer. In addition, communication of information via the internet unit enables the estimate to be instantly presented to the customer without restriction of time and place, thereby curtailing cost and delivery date of delivery parts. Ultimately, manufacture cost for assembling in the customer's site can be reduced.

Further, the boundary value is defined between the neighboring region closer to the ideal value of either characteristic parameter or dimension parameter of parts and the remote region residing in tolerance but apart from the ideal value, and then the parts classified by the neighboring region and the remote region are delivered to the customer in different packages, thereby curtailing additional machining for at least the parts residing in neighboring region during assembling the product in the customer's site. Consequently, manpower and cost of the product in customer's site can be reduced.

[BRIEF DESCRIPTION OF THE DRAWINGS]

Fig. 1 is a diagram showing a flow of parts marketing system according to the present invention.
Fig. 2 is a diagram showing an overall structure of parts marketing system according to the present invention.
Fig. 3 is a diagram showing a simulation unit of parts marketing system according to the present invention.
Fig. 4 is a flow chart showing an operation of a simulator for estimating connection loss, according to the present invention.
Figs. 5A and 5B are views for illustrating axial misalignment of a single plug, according to the present invention.
Figs. 6A and 6B are views for illustrating axial misalignment in a paired state of two plugs, according to the present invention.
Figs. 7A and 7B are views for illustrating orientation error in a paired state of two plugs, according to the present invention.
Fig. 8 is a diagram for explaining a method for randomly extracting one datum among distribution data using random number generation, according to the present invention.
Fig. 9 is a diagram for explaining a method for randomly extracting one angular datum among 360-degree directions, according to the present invention.
Fig. 10 is a graph for explaining a principle according to a third embodiment.
Fig. 11A is a graph showing distribution of occurrence on concentricity of ferrules. Fig. 11B is a graph showing distribution of occurrence on inner diameter of ferrules.
Fig. 12 is a diagram showing a flow of another example of parts marketing system according to the present invention.
Fig. 13 is a diagram showing a flow of a conventional parts marketing system.
Fig. 14 is a diagram showing a flow of another conventional parts marketing system.
Fig. 15 is a diagram showing a flow of yet another conventional parts marketing system.

[EXPLANATORY NOTE]

1: input unit
2: output unit
3: workstation unit
4: database unit
5: database unit
6: production management unit
7: internet unit
8: input unit
9: shipment indication unit
11, 11': ferrule
11a, 11a':through-hole
11b, 11b':front end face
11c, 11c':outer surface
12: optical fiber protector
13: optical fiber
15: split sleeve
15a: slit
15b: opposite portion

20: plug
21,22: parts
23: product

[BEST EMBODIMENT FOR CARRYING OUT THE INVENTION]

Embodiments according to the present invention will be described below with reference to the drawings.

(Embodiment 1)

In this embodiment, a parts marketing system includes: a database unit for storing distribution data of dimensions or characteristics of each lot, and price and delivery date with respect to delivery parts; an input unit for inputting the customer's product specifications and the distribution data of dimensions or characteristics of parts combined by the customer; a simulation unit for retrieving required information from the database unit, based on information from the input unit, and for selecting parts lot having optimal distribution data of dimensions or characteristics using a simulator; and an output unit for indicating an estimation sheet including the distribution data of dimensions or characteristics, the delivery date and the price with respect to the selected optimal parts lot.

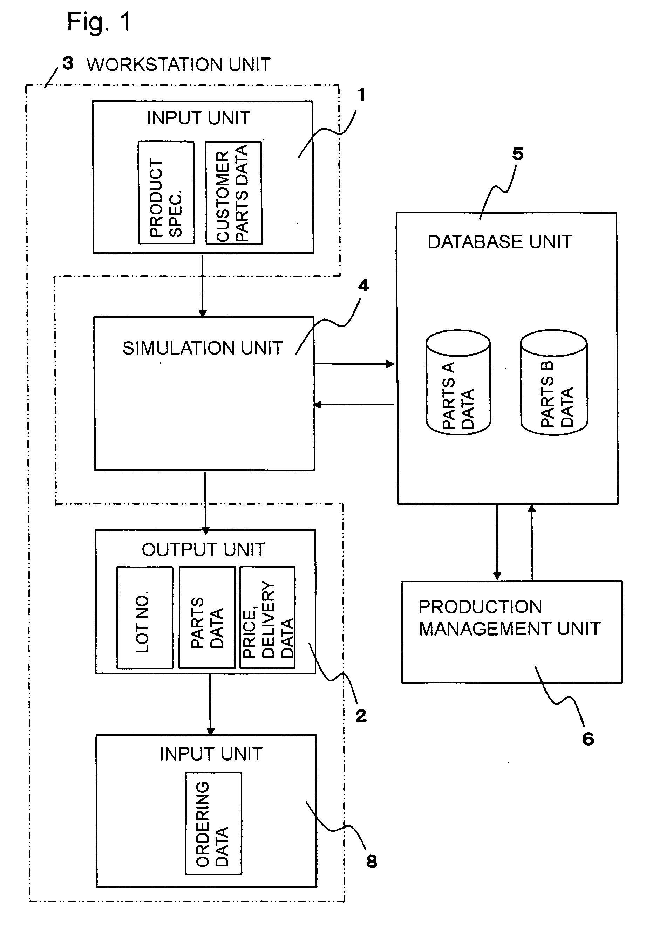

Referring to Fig. 1, the parts marketing system according to this embodiment will be described below in detail.

A workstation unit 3 is configured of the input unit 1 for inputting request specifications of product which is assembled by the customer and distribution data of dimensions or characteristics of parts which are owned by the customer; the output unit 2 for indicating an estimation sheet including distribution data of dimensions or characteristics, delivery date and price with respect to the selected optimal parts lot; and an input unit 8 for inputting customer's final ordering data.

The workstation unit 3 is preferably a single machine, such as personal computer, including a keyboard, a display and an processing unit.

The workstation unit 3 may be provided with a terminal in customer's site and/or a terminal in a sales department in charge of parts seller.

The parts marketing system further includes a simulation unit 4 for simulating distribution of dimensions or characteristics of optimal parts based on information from the input unit 1, and for comparing the result with information of each lot retrieved from the database unit 5, and for selecting parts lot having optimal distribution data of dimensions or characteristics.

The simulation unit may select combination of parts lots with respect to a plurality of parts each having optimal distribution data of dimensions or characteristics.

For such a simulation method, addition theorem, Monte Carlo simulation, transformation of probability variables or the like can be utilized. Among them the method using addition theorem will be described later in detail.

The database 5 stores distribution data of dimensions or characteristics of each lot, and price and delivery date with respect to parts. The database may store data of single parts as well as a plurality of parts.

In a case of lacking appropriate information in the database unit 5, the fact is informed to the production management unit 6, from which acceptable information of the parts lot is inputted to the database unit 5 and registered as new data to update sequentially the data.

The production management unit 6 has functions of storing data which is not registered in the database unit 5 and fundamentally revising producing steps, equipment and machining jig or the like. Hence, the production management unit 6 operates processes using a computer, as well as judgment of a production manager.

Further, this parts marketing system is characterized in that at least two out of the database unit 5, the input units 1 and 8, the simulation unit 4 and the output unit 2 are provided in the same machine. For example, the input units 1 and the output unit 2 may constitute the same machine, i.e., the workstation unit 1, otherwise the input unit 1 and the output unit 2 are separated from each other in different workstation units 1 and 8. The simulation unit 4 and the database unit 5 may constitute the same machine. Thus at least two out of the database unit 5, the input unit 1, the simulation unit 4 and the output unit 2 are provided in the same machine, thereby curtailing cost of the total system. Ultimately, manufacture cost for assembling in the customer's site can be reduced.

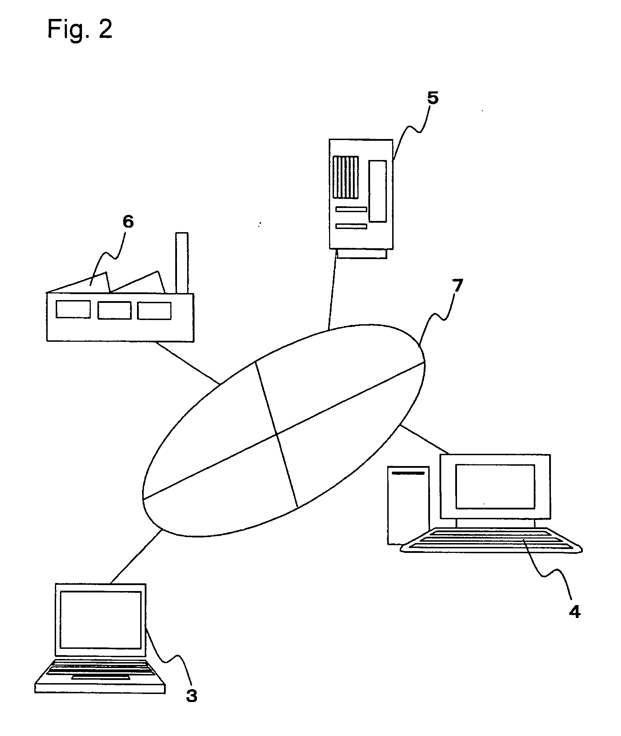

Next, referring to Fig. 2, the parts marketing system using an internet unit 7 according to this embodiment will be described below.

In this parts marketing system according to this embodiment, at least two out of the database unit 5, the workstation 3 including the input units 1 and 8 and the output unit 2, the simulation unit 4 and the production management unit 6 are capable of communicating information through the internet unit 7 with each other, thereby instantly presenting estimate to the customer without restriction of time and place, Consequently, cost and delivery date of delivery parts can be curtailed. Ultimately, manufacture cost for assembling in the customer's site can be reduced.

It is more preferable that all the database unit 5, the workstation 3, the simulation unit 4 and the production management unit 6 are connected with the internet unit 7 to curtail time, in which measures for security of information, such as firewall, and anti-infection of virus may be taken.

Next, a simulator in the simulation unit 4 according to this embodiment will be described in detail.

The simulator according to this embodiment simulates distribution of dimension parameter or characteristic parameter of the delivery parts, based on both of distribution of dimensions or characteristics of the products which are assembled in the customer's site and distribution data of dimension parameter or characteristic parameter of the parts which are owned by the customer.

Otherwise, not limited and contrary to above, the simulator may simulate distribution of dimension or characteristics of the products which are assembled in the customer's site, based on both of distribution data of dimension parameter or characteristic parameter of parts which are owned by the customer and distribution data of dimension parameter or characteristic parameter of delivery parts.

Then, various simulation formula, such as addition theorem, Monte Carlo simulation, transformation of probability variables as described, can be employed. Here, a simulation using addition theorem of variance will be described.

Since electric or electronic products are generally mass-produced, there is little case where parts are selected to extract good parts after manufacturing. Therefore, distribution data of dimensions and characteristics of parts is assumed to form normal distribution.

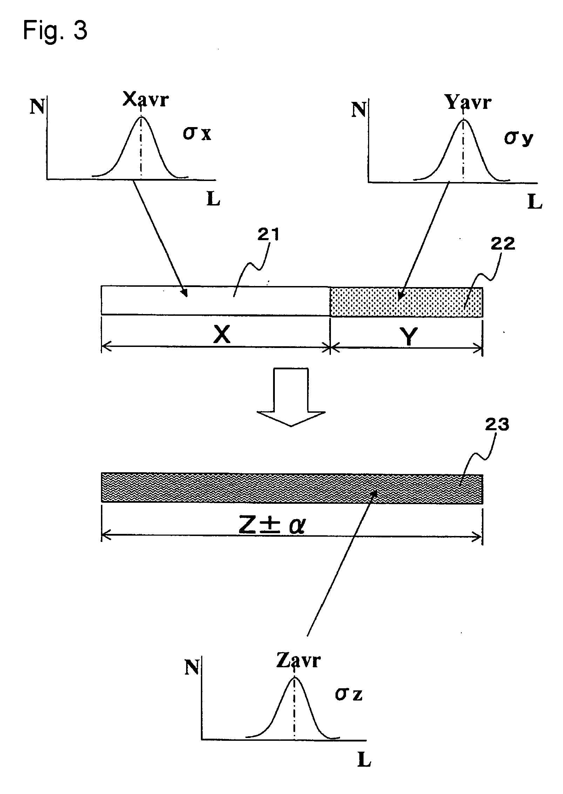

Referring to Fig. 3, addition theorem of variance, which can be used in the simulation unit 4 of the parts marketing system according to this embodiment, will be described.

For simplifying description, suppose that parts 21 and 22 are simply joined to each other on the end portions to form a product 23. The part 21 has a nominal dimension X, an average thereof Xavr and distribution with a standard deviation $\sigma x$. The part 22 also has a nominal dimension Y, an average thereof Yavr and distribution with a standard deviation $\sigma y$. Hence, the product 23, which is formed with these parts joined on each end, has a tolerance $Z \pm \alpha$.

When distribution data of dimensions of the parts 21 and 22 form normal distribution, the resulting product 23 has a dimensional average Zavr, equal to Xavr + Yavr, and a standard deviation $\sigma z$, equal to $(\sigma x^2 + \sigma y^2)^{1/2}$, which satisfies addition theorem of variance.

The parts marketing system according to this embodiment can select and sell parts lot having optimal distribution data of dimensions or characteristics, based on both of customer's product specifications and distribution data of dimensions or characteristics of parts combined by the customer.

In other words, when defining the customer's product specifications as the tolerance $Z \pm \alpha$, dimensions of parts combined by the customer as the distribution data with the average Yavr and the standard deviation $\sigma y$, delivery parts require distribution data which is less dispersed than distribution having the average Xavr, equal to Z - Yavr, and the standard deviation $\sigma x$, equal to $(\alpha^2/16 - \sigma y^2)^{1/2}$.

Incidentally, defining $4\sigma$ as Cpk 1.33 is assumed to satisfy sufficient process capability, and $4\sigma z$ is substituted for $\alpha$, resulting in $(\alpha^2/16 - \sigma y^2)^{1/2}$ as above.

Therefore, by either selecting a lot having distribution narrower than the above result, as parts lot having optimal distribution date of dimension, out of parts lots which have been already manufactured, or manufacturing another new lot having distribution narrower than the above result if no optimal parts lot remain, parts lot having optimal distribution data of dimension can be proposed to the customer, and then the customer's approval can lead to acceptance of ordering.

(Embodiment 2)

A parts marketing system according to this embodiment handles parts for connecting optical fibers to each other, for example, optical connector parts, such as sleeve or ferrule. The system includes a database unit for storing distribution data of dimensions or characteristics of each lot, and price and delivery date with respect to delivery parts; an input unit for inputting the customer's specifications of an optical connector and the distribution data of dimensions or characteristics of parts combined by the customer; a simulation unit for retrieving required information from the database unit, based on information from the input unit, and for selecting parts lot having optimal distribution data of dimensions or characteristics using a simulator; and an output unit for indicating an estimation sheet including the distribution data of dimensions or characteristics, the delivery date and the price with respect to the selected optimal parts lot.

The workstation unit 3, as shown in Fig. 1, is configured of the input unit 1 for inputting request specifications of optical connectors which are assembled in the customer's site and distribution data of dimensions or characteristics of parts which are owned by the customer; the output unit 2 for indicating an estimation sheet including distribution data of dimensions or characteristics, delivery date and price with respect to the selected optimal parts lot; and an input unit 8 for inputting customer's final ordering data.

The workstation unit 3 is preferably a single machine, such as personal computer, including a keyboard, a display and an processing unit.

The workstation unit 3 may be provided with a terminal in customer's site and/or a terminal in a sales department in charge of parts seller.

The system further includes a simulation unit 4 for simulating distribution of dimensions or characteristics of optimal parts based on information from the input unit 1, and for comparing the result with information of each lot retrieved from the database unit 5, and for selecting parts lot having optimal distribution data of dimensions or characteristics.

The simulation unit may select combination of parts lots with respect to a plurality of parts each having optimal distribution data of dimensions or characteristics.

For such a simulation method, addition theorem, Monte Carlo simulation, transformation of probability variables or the like can be utilized. Among them the method using Monte Carlo simulation will be described later in detail.

The database 5 stores distribution data of dimensions or characteristics of each lot, and price and delivery date with respect to parts. The database may store data of single parts as well as a plurality of parts.

In a case of lacking appropriate information in the database unit 5, the fact is informed to the production management unit 6, from which acceptable information of the parts lot is inputted to the database unit 5 and registered as new data to update sequentially the data.

The production management unit 6 has functions of storing data which is not registered in the database unit 5 and fundamentally revising producing steps, equipment and machining jig or the like. Hence, the production management unit 6 operates processes using a computer, as well as judgment of a production manager.

Further, this parts marketing system is characterized in that at least two out of the database unit 5, the input units 1 and 8, the simulation unit 4 and the output unit 2 are provided in the same machine. For example, the input units 1 and the output unit 2 may constitute the same machine, i.e., the workstation unit 1, otherwise the input unit 1 and the output unit 2 are separated from each other in different workstation units 1 and 8. The simulation unit 4 and the database unit 5 may constitute the same machine. Thus at least two out of the database unit 5, the input unit 1, the simulation unit 4 and the output unit 2 are provided in the same machine, thereby curtailing cost of the total system. Ultimately, manufacture cost for assembling in the customer's site can be reduced.

Next, referring to Fig. 2, the parts marketing system using an internet unit 7 according to this embodiment will be described below.

In this parts marketing system according to this embodiment, at least two out of the database unit 5, the workstation 3 including the input units 1 and 8 and the output unit 2, the simulation unit 4 and the production management unit 6 are capable of communicating information through the internet unit 7 with each other, thereby instantly presenting estimate to the customer without restriction of time and place, Consequently, cost and delivery date of delivery parts can be curtailed. Ultimately, manufacture cost for assembling in the customer's site can be reduced.

It is more preferable that all the database unit 5, the workstation 3, the simulation unit 4 and the production management unit 6 are connected with the internet unit 7 to curtail time, in which measures for security of information, such as firewall, and anti-infection of virus may be taken.

Incidentally, in this embodiment, for example, the product specifications of optical connectors which are assembled by the customer may mean either a standard value of connection loss or a standard value of return loss for the optical connectors. The dimension parameter or the characteristic parameter of parts which are owned by the customer may mean distribution of outer diameter and distribution of concentricity of core for optical fibers which are owned by the customer. The dimension parameter or the characteristic parameter of delivery parts may mean distribution of dimension, including an inner diameter, outer diameter and concentricity of ferrules to be delivered, and distribution of dimension, including cylindricality, straightness and concentricity of split sleeves, or distribution of connection loss and distribution of pull out force.

The above-described case is only an example. In a parts marketing system for designing and selling parts based on customer's product specifications of optical connectors, any method for selecting and selling parts lot having optimal distribution data of dimensions or characteristics, based on both of customer's product specifications of optical connectors and distribution data of dimensions or characteristics of parts combined by the customer may employ any parameter to attain effect according to the present invention.

Next, a simulator in the simulation unit 4 according to this embodiment will be described in detail.

The simulator according to this embodiment simulates distribution of dimension parameter or characteristic parameter of the delivery parts, based on both of distribution of dimensions or characteristics of the products of optical connectors which are assembled by the customer and distribution data of dimension parameter or characteristic parameter of the parts which are owned by the customer.

Otherwise, not limited and contrary to above, the simulator may simulate distribution of dimension or characteristics of the optical connectors which are assembled in the customer's site, based on both of distribution data of dimension parameter or characteristic parameter of parts which are owned by the customer and distribution data of dimension parameter or characteristic parameter of delivery parts.

Then, various simulation formula, such as addition theorem, Monte Carlo simulation, transformation of probability variables as described, can be employed. Here, a simulation using Monte Carlo simulation will be described.

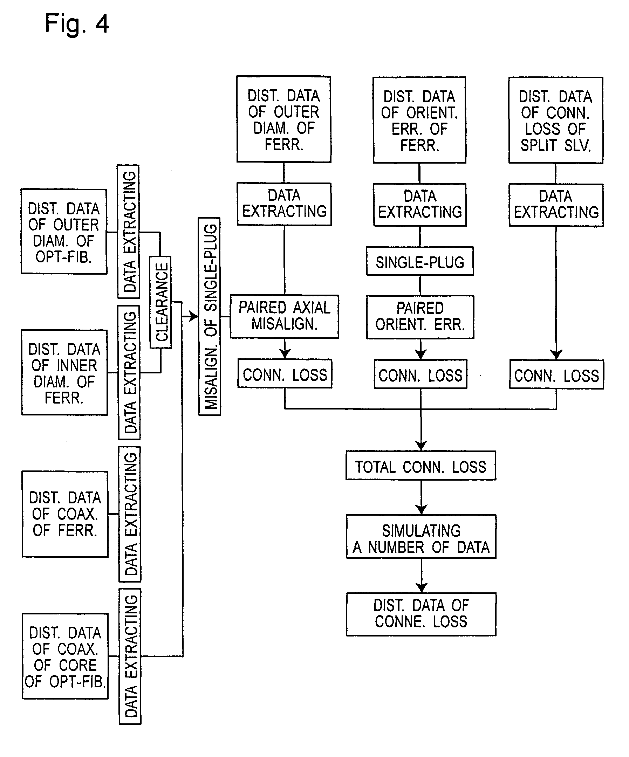

As an example of the present invention, Fig. 4 shows a method for simulating distribution of connection loss of an optical connector including a hollow cylindrical single-core ferrule, by means of Monte Carlo simulation.

First, one datum is extracted among distribution data of outer diameter of optical fibers. Data extraction is performed using random number generation. Because of usage of random number, this method is called Monte Carlo, Monaco, famous as a gambling place. Specifically, it is relatively easy to obtain random numbers using a random number table, or a personal computer, such as a random number generating function RAND() or RANDBETWEEN() in "Excel", spreadsheet software supplied by Microsoft. Details of such data extraction will be described below.

Next, one datum is randomly extracted among distribution data of inner diameter of ferrules in the same manner as above. Here, since the outer surface of an optical fiber surely comes in contact with the inner surface of a ferrule on at least one point in an end face of the ferrule, a clearance between the inner diameter of the ferrule and the out diameter of the optical fiber, i.e., half of a value of the outer diameter of the optical fiber subtracted from the inner diameter of the ferrule, means axial misalignment.

Next, one datum is randomly extracted among distribution data of coaxiality of ferrules in the same manner as above. Further, one datum is randomly extracted among distribution data of coaxiality of core of optical fibers in the same manner as above.

Total axial misalignment of a single plug is calculated based on the above-described half value of the outer diameter of the optical fiber subtracted from the inner diameter of the ferrule, coaxiality of ferrules and coaxiality of core of optical fibers.

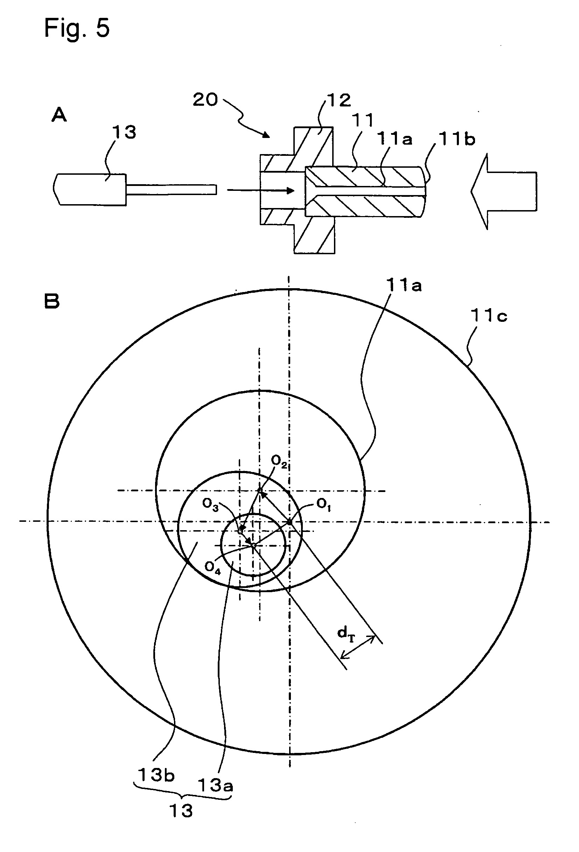

In Fig. 5A, an optical fiber protector 12 is fixed to a ferrule 11 having a through-hole 11a, and an optical fiber 13 is inserted and fixed into an opening of the optical fiber protector 12, thereby forming a plug 20. Axial misalignment means displacement from the center of an outer surface 11c in an end face 11b of the ferrule. Fig. 5B is an enlarged view from the end face direction of the ferrule 1.

Here, defining the center of the outer surface 11c as $O_1$, the center of the through-hole of the ferrule as $O_2$, respectively, displacement of $O_2$ means half value of coaxiality. Next, defining the center of the optical fiber as $O_3$, a distance between $O_2$ and $O_3$ means half of a value of the outer diameter of the optical fiber subtracted from the inner diameter of the ferrule. Further, defining the center of core of the optical fiber as $O_4$, a distance between $O_3$ and $O_4$ means half value of coaxiality of core of the optical fiber. Finally, a distance between $O_1$ and $O_4$ means total axial misalignment $d_T$ relative to the outer surface 11c of the ferrule.

Then, since one axial misalignment for each parameter depends on a misalignment angle among 360-degree directions, even if axial misalignment for each parameter is large, the total axial misalignment is not always large.

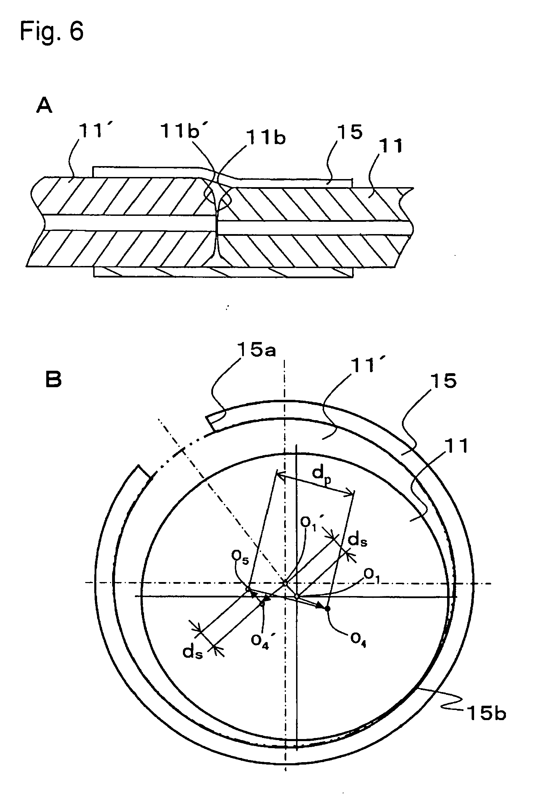

As described above, axial misalignment of the single plug can be calculated. However, it must be calculated on condition of a pair of plugs being in contact with each other for an optical connector. Hence, a method for calculating the paired axial misalignment will be described below using Figs. 6A and 6B.

Fig. 6A shows a state of the ferrule 11 in contact with another ferrule 11', in which end faces 11b and 11b' come in contact with each other by a split sleeve 5.

Here, as shown in Fig. 6B, an inner surface of an opposite portion 15b to a slit 15a of the split sleeve 15 constitutes a positioning reference point for the ferrules 11 and 11'. The ferrule 11' with a larger diameter is likely to be displaced toward the slit 15a. Defining the center of the total axial misalignment with respect to the center $O_1$ of the outer surface of the smaller ferrule 11 as $O_4$, and the center of the total axial misalignment with respect to the center $O_1'$ of the outer surface of the larger ferrule 11' as $O_4$, displacement corresponding to a distance $d_s$ between $O_1$ and $O_1'$ may be directed to the slit 15a. Here, the distance $d_s$ between $O_1$ and $O_1'$ means a half value of difference in diameter between the larger ferrule 11' and the smaller ferrule 11.

Accordingly, the center of the paired axial misalignment is finally defined as $O_5$, and a distance $d_p$ between $O_4$ and $O_5$ means the paired axial misalignment.

Here, the outer diameters of the larger ferrule 11' and the smaller ferrule 11 are randomly extracted among the distribution data of outer diameter of ferrules, as shown in Fig. 4.

Next, for orientation error in the same manner as above, two data are randomly extracted among distribution data of orientation error to calculate paired orientation error.

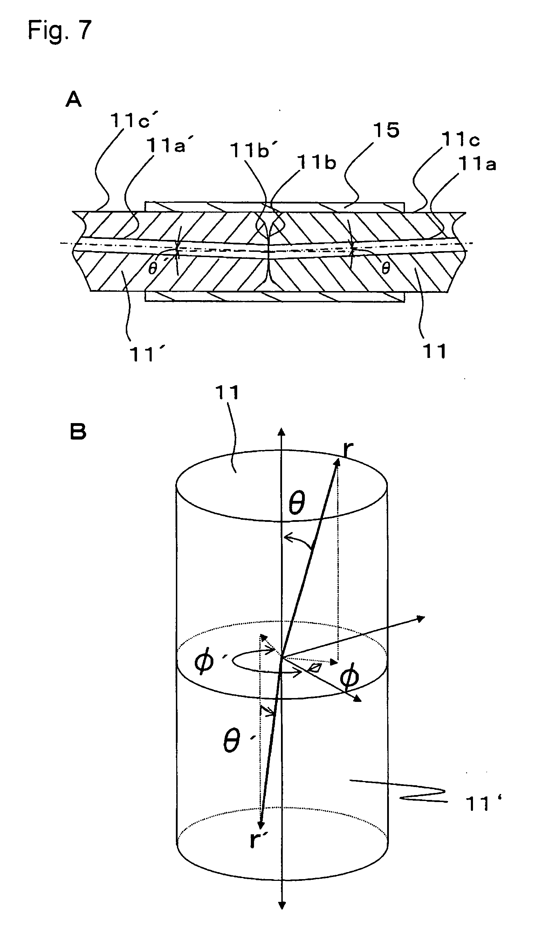

Fig. 7A is a cross-sectional view showing a state of the ferrules 11 and 11' being in contact with each other on the end faces 11b and 11b' inside the split sleeve 5. Fig. 7B is an three-dimensional diagram representing the orientation error in polar coordinates.

The through-holes 11a and 11a' are tilted to the outer surfaces 11c and 11c' by $\theta$ and $\theta'$ degree, respectively, in the cross-section. However, when considering tilting with $\varphi$ and $\varphi'$ among 360-degree directions on the basis of the contact face, a relative angle between an orientation error vector r of the ferrule 11 and an orientation error vector r' of the ferrule 11' means the paired orientation error.

Incidentally, the more number of distribution data of respective parameters is better for the simulator according to the present invention. The less number of data brings the worse precision of connection loss value to be obtained. It is enough to have at least 32 data.

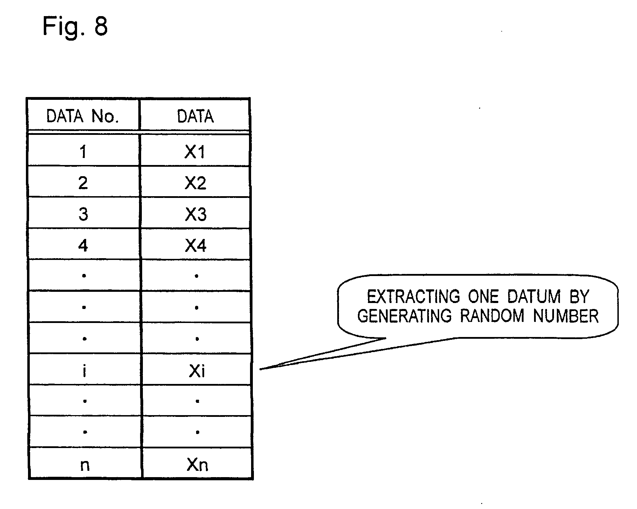

Here, a method for extracting randomly and evenly one datum among distribution data using random number will be described below, referring to Fig. 8.

Respective data are numbered in advance with serial integers 1 to n. In this case, it is not always necessary to arrange data Xn. Next, after generating a random number to extract an i-th data number, data Xi associated therewith is extracted. Specifically, for example, by using a function RANDBETWEEN(1,n) in the above-mentioned spreadsheet software "Excel", an integer 1 to n can be generated, and then datum inputted in the i-th cell can be extracted based on the one resulting random number.

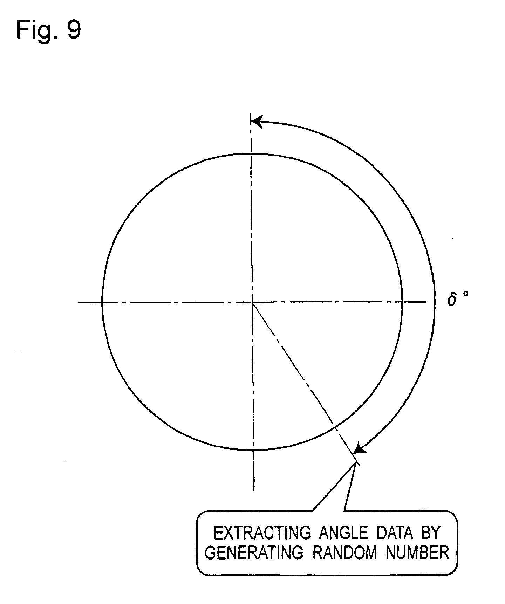

Next, a method for extracting randomly and evenly one datum among angles in 360-degree directions using random number will be described below in Fig. 9.

One angle can be selected from 0 to 359.9999... degree, but a unit of one degree is enough for calculating connection loss, so $\delta$ degree is extracted from 0 to 359 degree. This can also be obtained, as described above, by using a function RANDBETWEEN(1,359) in the spreadsheet software "Excel", and an integer 0 to 359 can be generated, and then the angle can be selected based on the one resulting random number.

Thus, the paired axial misalignment and the paired orientation error can be calculated.

Next, returning to Fig. 4, from the paired axial misalignment, connection loss $IL_\Delta$ due to axial misalignment is calculated by Equation 1. Further, from the paired orientation error, connection loss $IL_\theta$ due to orientation error is calculated by Equation 2. Then, by generating a random number among distribution data of connection loss of a split sleeve as described above, one value of connection loss $IL_S$ is extracted. In the following Equations 1 and 2, w is a radius of mode field of the optical fiber.

(Equation 1)

$$IL_\Delta(dB) = 4.34(d/w)^2$$

(Equation 2)

$$IL_\theta(dB) = 91.4(\theta w/\lambda)^2$$

Incidentally, for the split sleeve the connection loss $IL_S$ is extracted by generating a random number among distribution data of connection loss, otherwise the connection loss may be calculated by randomly extracting data among distribution data of dimension of the split sleeve.

The sum of the connection loss $IL_\Delta$ due to axial misalignment, the connection loss $IL_\theta$ due to orientation error, and the connection loss $IL_S$ of the split sleeve means a total connection loss. The total connection loss is based on a combination of a pair of ferrules. Next, a plurality of connection loss are calculated as described above. Distribution data can be obtained from the plurality of connection loss.

The above-described simulator using Monte Carlo simulation simulates distribution of characteristics of optical connectors which are assembled in the customer's site, based on both of distribution data of dimension parameter or characteristic parameter of parts which are owned by the customer, i.e., customer's parts data obtained from the input unit 1, and distribution data of dimension parameter or characteristic parameter of parts which have been already produced, which are stored in the database unit.

However, by changing the above procedure it is easy to simulate distribution of dimension parameter or characteristic parameter of delivery parts, based on both of product specifications of optical connectors which are assembled in the customer's site and distribution data of dimensions or characteristics of parts which are owned by the customer.

As described above, in the parts marketing system for designing and selling parts based on customer's product specifications of optical connectors, parts lot having optimal distribution data of dimensions or characteristics can be selected and sold, based on both of customer's product specifications of optical connectors and distribution data of dimensions or characteristics of parts combined by the customer.

(Embodiment 3)

In this embodiment of a parts marketing system for designing and selling parts based on customer's product specifications, at least one boundary value is defined between an ideal value of either characteristic parameter or dimension parameter of parts and a tolerance limit value, and then parts are classified by the ideal value, the tolerance limit value and the boundary value, to deliver the parts to the customer.

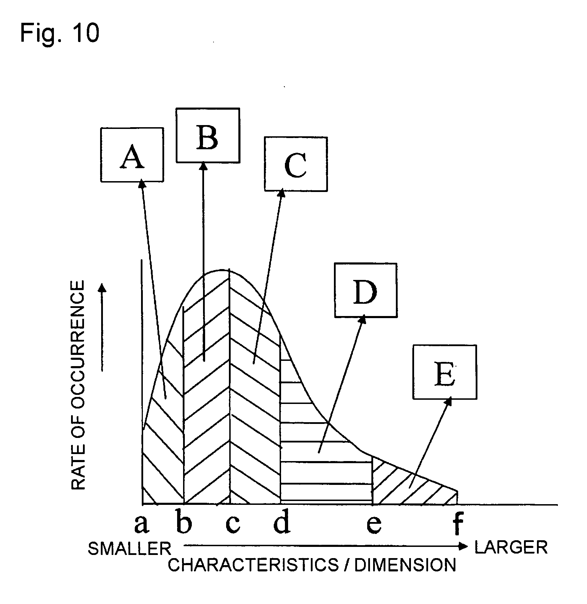

Fig. 10 is a graph for explaining a principle according to this embodiment. The horizontal axis of the graph shows characteristics or dimension with the value increased along the right direction. The vertical axis shows rate of occurrence with the value increased along the upward direction. The curved line shows curved histogram of characteristics or dimension, wherein using an ideal value 'a', boundary values 'b', 'c', 'd', 'e', and a tolerance limit value 'f', a package A is defined between the ideal value a and the boundary value b, a package B is defined between the boundary values b and c, a package C is defined between the boundary values c and d, a package D is defined between the boundary values d and e, and a package E is defined between the boundary value e and the tolerance limit value f. The present invention is characterized by classification with respective boundary values. Such classification enables manufacturing process to be changed with respect to each of packages A to E delivered to the customer, thereby curtailing time required for assembling and machining in the customer's site. Consequently, cost of product in customer's site can be reduced.

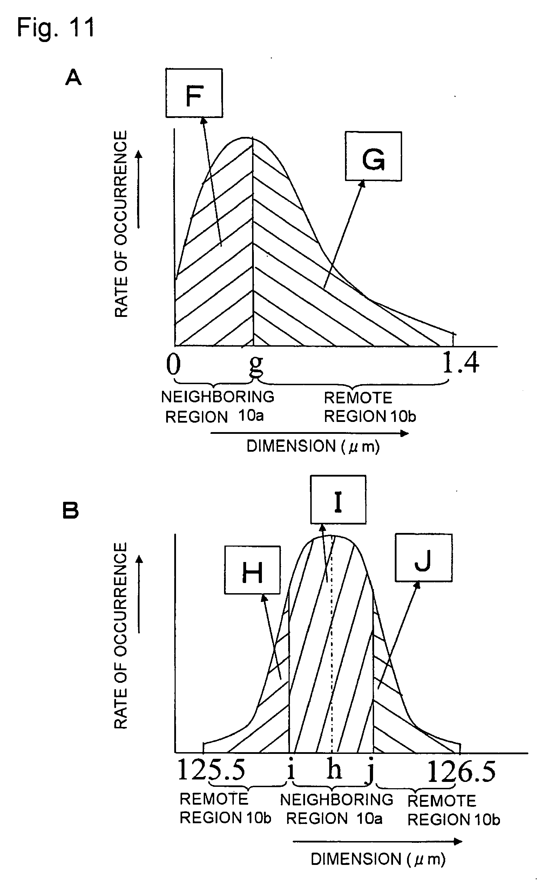

In the parts marketing system for designing and selling parts based on customer's product specifications, the boundary value is preferably defined between a neighboring region closer to the ideal value of either characteristic parameter or dimension parameter of parts and a remote region residing in tolerance but apart from the ideal value, and then the parts are classified by the neighboring region and the remote region to deliver the parts to the customer. This will be described in detail with reference to Figs. 11A and 11B using an example of an optical connector.

Fig. 11A is a graph showing distribution of occurrence on concentricity of ferrules used for optical connectors. The concentricity has an ideal value of zero ($\mu$m), a tolerance limit value of 1.4 ($\mu$m), which is unilateral tolerance. A boundary value 'g' is defined between concentricity values of 0 to 1.4 ($\mu$m), and then a package F residing in a neighboring region 10a with concentricity of 0 to g ($\mu$m) and a package G residing in a remote region 10b with concentricity of g to 1.4 ($\mu$m) are delivered to the customer.

Fig. 11B is a graph showing distribution of occurrence on inner diameter of ferrules, in which inner diameters 125.5 ($\mu$m) and 126.5 ($\mu$m) are tolerance limit values, i.e., bilateral tolerance. In this case of a range of 125.5 to 126.5 ($\mu$m), the ideal value is defined as an intermediate value 'h' of 126.0 ($\mu$m). In this case, boundary values 'i' and 'j' are defined in the both sides of the standard intermediate value h, and then a package H residing in a remote region 10b of inner diameter of 125.5 to i ($\mu$m), a package I residing in a neighboring region 10a of inner diameter of i to j ($\mu$m), and a package J residing in another remote region 10b of inner diameter of j to 126.5 ($\mu$m) will be delivered to the customer.

In the customer's site, by employing the package G residing in the remote region 10b with respect to coaxiality, or the packages H and J residing in the remote region 10b with respect to inner diameter, a ferrule therein is fixed to an optical fiber using adhesives, and then the front end face of the ferrule is polished to form a precise convex sphere together with the end face of the optical fiber, and then aligning process is performed so that the core position of the optical fiber coincides with a protrusion of a plug housing, and then embedding it into the plug housing using a spring. In the aligning process, the plug having the fixed and polished optical fiber is connected to an eccentric mater plug in which the core position is shifted by 1 ($\mu$m) along the direction of the protrusion of the plug housing, and then connection losses are measured four times while rotating the ferrule by each 90 degree, and then the ferrule is embedded into the plug housing at a angle of the least connection loss.

Further, by employing the package F residing in the neighboring region 10a with respect to coaxiality, or the package I residing in the neighboring region 10a with respect to inner diameter, a ferrule therein is fixed to an optical fiber using adhesives, and then the front end face of the ferrule is polished to form a precise convex sphere together with the end face of the optical fiber, and then without aligning process, embedding it into the plug housing using a spring.

Thus, the packages F and I can curtail such aligning process required for huge man-hour, thereby eliminating cost of manufacture in the customer's site.

In a case of identifying the classified neighboring and remote regions 10a and 10b based on different package feature, each of the packages preferably has a different package case, more preferably, each of the packages has a different color of the package case. In general, the package case is made of plastics, whose color can be relatively easily changed.

Next, a parts marketing system according to this embodiment will be described in detail using an example of an optical connector.

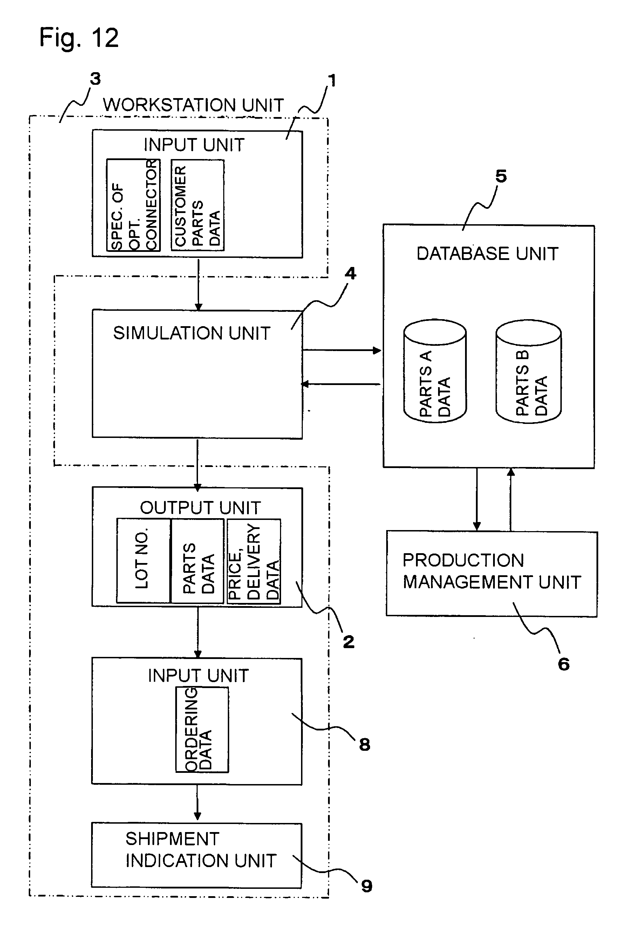

The workstation unit 3, as shown in Fig. 12, is configured of the input unit 1 for inputting request specifications of optical connectors which are assembled in the customer's site and distribution data of dimensions or characteristics of parts which are owned by the customer; the output unit 2 for indicating an estimation sheet including distribution data of dimensions or characteristics, delivery date and price with respect to the selected optimal parts lot; an input unit 8 for inputting customer's final ordering data; and a shipment indication unit 9 for indicating instructions to production department or inventory control department.

The workstation unit 3 is preferably a single machine, such as personal computer, including a keyboard, a display and an processing unit.

The workstation unit 3 may be provided with a terminal in customer's site and/or a terminal in a sales department in charge of parts seller.

The system further includes a simulation unit 4 for simulating distribution of dimensions or characteristics of optimal parts based on information from the input unit 1, and for comparing the result with information of each lot retrieved from the database unit 5, and for selecting parts lot having optimal distribution data of dimensions or characteristics.

The simulation unit may select combination of parts lots with respect to a plurality of parts each having optimal distribution data of dimensions or characteristics.

For such a simulation method, addition theorem, Monte Carlo simulation, transformation of probability variables or the like can be utilized.

The database 5 stores distribution data of dimensions or characteristics of each lot, and price and delivery date with respect to parts. The database may store data of single parts as well as a plurality of parts.

In a case of lacking appropriate information in the database unit 5, the fact is informed to the production management unit 6, from which acceptable information of the parts lot is inputted to the database unit 5 and registered as new data to update sequentially the data.

The production management unit 6 has functions of storing data which is not registered in the database unit 5 and fundamentally revising producing steps, equipment and machining jig or the like. Hence, the production management unit 6 operates processes using a computer, as well as judgment of a production manager.

Further, this parts marketing system is characterized in that at least two out of the database unit 5, the input units 1 and 8, the simulation unit 4 and the output unit 2 are provided in the same machine. For example, the input units 1 and the output unit 2 may constitute the same machine, i.e., the workstation unit 1, otherwise the input unit 1 and the output unit 2 are separated from each other in different workstation units 1 and 8. The simulation unit 4 and the database unit 5 may constitute the same machine. Thus at least two out of the database unit 5, the input unit 1, the simulation unit 4 and the output unit 2 are provided in the same machine, thereby curtailing cost of the total system. Ultimately, manufacture cost for assembling in the customer's site can be reduced.

Next, referring to Fig. 2, the parts marketing system using an internet unit 7 according to this embodiment will be described below.

In this optical connector parts marketing system according to this embodiment, at least two out of the database unit 5, the workstation 3 including the input units 1 and 8 and the output unit 2, the simulation unit 4 and the production management unit 6 are capable of communicating information through the internet unit 7 with each other, thereby instantly presenting estimate to the customer without restriction of time and place, Consequently, cost and delivery date of delivery parts can be curtailed. Ultimately, manufacture cost for assembling in the customer's site can be reduced.

It is more preferable that all the database unit 5, the workstation 3, the simulation unit 4 and the production management unit 6 are connected with the internet unit 7 to curtail time, in which measures for security of information, such as firewall, and anti-infection of virus may be taken.

Incidentally, in this embodiment, for example, the product specifications of optical connectors which are assembled by the customer may mean either a standard value of connection loss or a standard value of return loss for the optical connectors. The dimension parameter or the characteristic parameter of parts which are owned by the customer may mean distribution of outer diameter and distribution of concentricity of core for optical fibers which are owned by the customer. The dimension parameter or the characteristic parameter of delivery parts may mean distribution of dimension, including an inner diameter, outer diameter and concentricity of ferrules to be delivered, and distribution of dimension, including cylindricality, straightness and concentricity of split sleeves, or distribution of connection loss and distribution of pull out force.

The above-described case is only an example. In a parts marketing system for designing and selling parts based on customer's product specifications of optical connectors, any method for selecting and selling parts lot having optimal distribution data of dimensions or characteristics, based on both of customer's product specifications of optical connectors and distribution data of dimensions or characteristics of parts combined by the customer may employ any parameter to attain effect according to the present invention.

Next, a simulator in the simulation unit 4 according to this embodiment can employ such Monte Carlo simulation as described in above-mentioned embodiment.

In this embodiment, the simulation is performed by changing setup of the boundary values 'b', 'c', 'd', 'e', 'g', 'i', 'j' to obtain a value which requires aligning process for each lot or not.

The sum of the connection loss $IL_\Delta$ due to axial misalignment, the connection loss $IL_\theta$ due to orientation error, and the connection loss $IL_S$ of the split sleeve, which are obtained using the Monte Carlo simulation, means a total connection loss. The total connection loss is based on a combination of a pair of ferrules. Next, a plurality of connection loss are calculated as described above. Distribution data can be obtained from the plurality of connection loss.

The above-described simulator using Monte Carlo simulation simulates distribution of characteristics of optical connectors which are assembled in the customer's site, based on both of distribution data of dimension parameter or characteristic parameter of parts which are owned by the customer, i.e., customer's parts data obtained from the input unit 1, and distribution data of dimension parameter or characteristic parameter of parts which have been already produced, which are stored in the database unit.

However, by changing the above procedure it is easy to simulate distribution of dimension parameter or characteristic parameter of delivery parts, based on both of product specifications of optical connectors which are assembled in the customer's site and distribution data of dimensions or characteristics of parts which are owned by the customer.

Incidentally, the present invention can be applied not only to the customer defined as a separate company, but also to a bargain without exchange of money, for example, in-house subsequent process, such as so-called "Kanban-System."

[EXAMPLE]

Examples of the present invention will be described below.

(Example 1)

As shown in Fig. 3, this will explain a case of making contact the end faces of a rod-like part 21 made of nickel alloy and a rod-like part 22 made of the same material with each other, and then soldering the joint portion thereof to produce a product 23.

The workstation unit 3 is installed in a customer's site to input 12.0 $\pm$ 0.3 mm as Z $\pm$ $\alpha$ for product specifications of the customer, and 5.3 mm and 0.023 mm as Yavr and $\sigma$y, respectively, for data of the parts 22 which are owned by the customer, at the input unit 1.

Next, the data are transmitted via the internet unit 7 to the simulation unit 4 installed in parts delivery site. In the simulation unit 4 installed is a simulator using addition theorem of variance, which can calculate as follows: Xavr = Z - Yavr = 12.0 - 5.3 = 6.7 mm, and the standard deviation $\sigma$x = $(\alpha^2/16 - \sigma y^2)^{1/2}$ = $(0.5^2/16 - 0.023^2)^{1/2}$ = 0.123 mm.

Thus, by this simulation, the distribution of dimension of the parts 21 requires the average of 6.7 mm and the standard deviation of 0.123 mm or below. Next, retrieving data of a plurality of parts, which have been already manufactured and stocked, stored in the database unit 5, lot number having parts data closest to the required standard value is extracted. If the database unit 5 has no parts data required, the fact is informed to the production management unit 6, which will make new scheduling of production.

Next, the extracted lot number, and the distribution data of the parts, the delivery date and the price associated therewith are transmitted via the internet unit 7 to indicate on a display screen of the output unit 2 in the workstation unit 3 in the customer's site. If the customer agrees to this indication, ordering data are inputted to the input unit 8, and the information is transmitted via the internet unit 7 to the parts delivery site, thereby reaching parts distribution contract.

According to the present invention, as described above, the estimate can be instantly presented to the customer without restriction of time and place, thereby curtailing cost and delivery date of delivery parts. Ultimately, manufacture cost for assembling in the customer's site can be reduced.

(Example 2)

Referring to the parts marketing system shown in Fig. 1, a flow including input of data, output of result of simulation and input of ordering data will be described below.

At the input unit 1 of the workstation unit 3 installed in a customer's site, as shown in Table 1, inputted are data of connection loss of 0.25 dB as 97% of the maximum value and the average of 0.12 dB for product specifications of an optical connector, an average of 0.1251 mm and a standard deviation of 0.00002 mm for outer diameter of optical fibers, which are assembled in a customer's site, and an average of 0.13 $\mu$m and a standard deviation of 0.064 $\mu$m for concentricity of the optical fibers.

The database unit 5 stores, as shown in Table 2, dimension data of each lot of ferrules as parts A, and data of each lot for connection loss at master connection with a split sleeve as parts B.

Respective data of the concentricity, the inner diameter and the outer diameter of each lot of ferrules are listed as below in this sequence, 0.68 $\mu$m, 0.201 $\mu$m, 0.12692 mm, 0.00001 mm, 2.4990 mm, 0.00009 mm for a lot A1, and 0.23 $\mu$m, 0.123 $\mu$m, 0.12570 mm, 0.00001 mm, 2.4991 mm, 0.00008 mm for a lot A2, and 0.32 $\mu$m, 0.138 $\mu$m, 0.12593 mm, 0.00001 mm, 2.4991 mm, 0.00009 mm for a lot A3.

Respective data of connection loss of each lot of split sleeves are listed as below, in sequence of average and standard deviation, 0.082 dB, 0.012 dB for a lot B1, and 0.023 dB, 0.051 dB for a lot B2, and 0.113 dB, 0.026 dB for a lot B3.

Next, the simulation unit 4, to which data stored in the database unit 5 are transmitted, performs simulation together with the customer's data, i.e., distribution data of concentricity and outer diameter of optical fibers. For calculated values in combination with each lot, a combination of lots, which allows the connection loss of 0.25 dB as 97% of the maximum value and the average of 0.12 dB required for product specifications of an optical connector by the customer, is selected.

In this embodiment, it was judged that two combinations of the lots A2 and B2 and the lots A3 and B2 could coincide with the above-described specifications of the optical connector. Then, the two combinations may be indicated to the output unit 2, however one closer to the customer's request is preferably indicated. In this embodiment, the combination of the lots A2 and B2 exhibits excessive specifications on the customer's request as compared to the combination of the lots A3 and B2, because the lot A2 has smaller distribution of concentricity. Therefore, the combination of the lots A3 and B2 is preferably proposed.

Next, the output unit 2 indicates the lot number "LOT A3", distribution data of the concentricity, the inner and outer diameters, the price, and the delivery date for ferrules, and the lot number "LOT B2", distribution data of the connection loss, the price, and the delivery date for split sleeves. The price and the delivery date for each lot is stored beforehand in the database unit in association with the lot number.

Next, if the customer agrees to contents indicated at the output unit 2, the screen is switched over, and then ordering data are transmitted from the output unit 8 to the parts delivery site, thereby reaching parts distribution contract.

In this embodiment, all of data are communicated via the Internet.

According to the present invention as described above, parts lot having optimal distribution data of dimensions or characteristics with respect to delivery parts can be selected and proposed based on both of request specifications of product which is assembled by the customer and distribution data of dimensions or characteristics of parts which are owned by the customer. In addition, communication of information via the internet unit enables the estimate to be instantly presented to the customer without restriction of time and place, thereby curtailing cost and delivery date of delivery parts. Ultimately, manufacture cost for assembling in the customer's site can be reduced.

(Table 1)

| CUSTOMER SITE | | |
|---|---|---|
| SPEC. OF OPT. CONNECTOR | DATA OF PARTS OWNED BY CUSTOMER | |
| CONNECTION LOSS AT 97% OF MAX. : 0.25dB | OUTER DIAMETER OF OPT. FIBER | AVE. : 0.1251 mm |
| | | $\sigma$ : 0.00002mm |
| CONNECTION LOSS AVE. : 0.12dB | CONCENTRICITY OF OPT. FIBER | AVE. : 0.13 $\mu$m |
| | | $\sigma$ : 0.064$\mu$m |

(Table 2)

| DELIVERY SITE | | | | | |
|---|---|---|---|---|---|
| | | CONCENTRICITY | INNER DIAMETER | OUTER DIAMETER | PARTS A (FERRULE) |
| | LOT A1 | AVE. : 0.68μm | AVE. : 0.12602mm | AVE. : 2.4990 mm | |
| | | σ: 0.201μm | σ: 0.0001mm | σ: 0.00009 mm | |
| | LOT A2 | AVE. : 0.23μm | AVE. : 0.1257mm | AVE. : 2.4991 mm | |
| | | σ: 0.123μm | σ: 0.0001mm | σ: 0.00008 mm | |
| | LOT A3 | AVE. : 0.32μm | AVE. : 0.12593 mm | AVE. : 2.4991 mm | |
| | | σ: 0.138μm | σ: 0.0001 mm | σ: 0.00009 mm | |
| | | CONNECTION LOSS | | | PARTS B (SPLIT SLEEVE) |
| | LOT B1 | AVE. : 0.082dB | | | |
| | | σ: 0.012dB | | | |
| | LOT B2 | AVE. : 0.023dB | | | |
| | | σ: 0.0051dB | | | |
| | LOT B3 | AVE. : 0.113dB | | | |
| | | σ: 0.026dB | | | |

OUT-PUT

OUT-PUT

(Example 3)

First, a simulation is performed using Monte Carlo method as described in Figs. 4 to 9, based on specifications having a connection loss of 0.15 dB or below of optical connectors for the product specifications of the customer.

In the parts marketing system for designing and selling parts based on customer's product specifications, at least one boundary value is defined between an ideal value of either characteristic parameter or dimension parameter of parts and a tolerance limit value, and then parts are classified by the ideal value, the tolerance limit value and the boundary value, to deliver the parts to the customer.

Referring to the parts marketing system shown in Fig. 12, a flow including input of data, output of result of simulation and input of ordering data will be described below.

At the input unit 1 of the workstation unit 3 installed in a customer's site, as shown in Table 1, inputted are data of connection loss of 0.25 dB as 97% of the maximum value and the average of 0.12 dB for product specifications of an optical connector, an average of 0.1251 mm and a standard deviation of 0.00002 mm for outer diameter of optical fibers, which are assembled in a customer's site, and an average of 0.13 μm and a standard deviation of 0.064 μm for concentricity of the optical fibers.

The database unit 5 stores, as shown in Table 2, dimension data of each lot of ferrules as parts A, and data of each lot for connection loss at master connection with a split sleeve as parts B.

Respective data of the concentricity, the inner diameter and the outer diameter of each lot of ferrules are listed as below in this sequence, 0.68 μm, 0.201 μm, 0.12692 mm, 0.00001 mm, 2.4990 mm, 0.00009 mm for a lot A1, and 0.23 μm, 0.123 μm, 0.12570 mm, 0.00001 mm, 2.4991 mm, 0.00008 mm for lot a A2, and 0.32 μm, 0.138 μm, 0.12593 mm, 0.00001 mm, 2.4991 mm, 0.00009 mm for a lot A3.

Respective data of connection loss of each lot of split sleeves are listed as below, in sequence of average and standard deviation, 0.082 dB, 0.012 dB for a lot B1, and 0.023 dB, 0.051 dB for a lot B2, and 0.113 dB, 0.026 dB for a lot B3.

Next, the simulation unit 4, to which data stored in the database unit 5 are transmitted, performs simulation together with the customer's data, i.e., distribution data of concentricity and outer diameter of optical fibers. For calculated values in combination with each lot, a combination of lots, which allows the connection loss of 0.25 dB as 97% of the maximum value and the average of 0.12 dB required for product specifications of an optical connector by the customer, is selected.

In this embodiment, it was judged that two combinations of the lots A2 and B2 and the lots A3 and B2 could coincide with the above-described specifications of the optical connector. Then, the two combinations may be indicated to the output unit 2, however one closer to the customer's request is preferably indicated. In this embodiment, the combination of the lots A2 and B2 exhibits excessive specifications on the customer's request as compared to the combination of the lots A3 and B2, because the lot A2 has smaller distribution of concentricity. Therefore, the combination of the lots A3 and B2 is preferably proposed.

The combination of the lots A3 and B2 is resulted from aligning. Next, the boundary value g, which allows the connection loss of 0.25 dB as 97% of the maximum value and the average of 0.12 dB without aligning of concentricity of these lots, is calculated for by simulation, with a result of the concentricity being 0.32 $\mu$m.

Then, the output unit 2 indicates the lot number "LOT A3", distribution data of the concentricity, the inner and outer diameters, the price, and the delivery date for ferrules, and the lot number "LOT B2", the boundary value g of the concentricity for classification, distribution data of the connection loss, the price, and the delivery date for split sleeves. The price and the delivery date for each lot is stored beforehand in the database unit in association with the lot number.

Next, if the customer agrees to contents indicated at the output unit 2, the screen is switched over, and then ordering data are transmitted from the output unit 8 to the parts delivery site, thereby reaching parts distribution contract. This information is transmitted to the shipment indication unit 9 and then to a production department.

In this embodiment, all of data are communicated via the Internet.

According to the present invention as described above, in the parts marketing system for designing and selling parts based on customer's product specifications, at least one boundary value is defined between an ideal value of either characteristic parameter or dimension parameter of parts and a tolerance limit value, and then parts are classified by the ideal value, the tolerance limit value and the boundary value, to deliver the parts to the customer. Therefore, parts lot having optimal distribution data of dimensions or characteristics with respect to delivery parts can be selected and proposed based on both of request specifications of optical connector product which is assembled by the customer and distribution data of dimensions or characteristics of parts which are owned by the customer. In addition, communication of information via the internet unit enables the estimate to be instantly presented to the customer without restriction of time and place, thereby curtailing cost and delivery date of delivery parts. Ultimately, manufacture cost for assembling in the customer's site can be reduced.

[INDUSTRIAL APPLICABILITY]

The parts marketing system according to the present invention is applicable to parts for electric or electronic products, optical connector parts, such as ferrule, sleeve, and any other general industrial parts.

**Claims**

1. A parts marketing system for designing and selling parts based on customer's product specifications, wherein the system selects and sells parts lot having optimal distribution data of dimensions or characteristics, based on both of customer's product specifications and distribution data of dimensions or characteristics of parts combined by the customer.

2. The parts marketing system according to Claim 1, wherein at least one boundary value is defined between an ideal value of either characteristic parameter or dimension parameter of parts and a tolerance limit value, and then parts are classified by the ideal value, the tolerance limit value and the boundary value, to deliver the parts to the customer.

3. The parts marketing system according to Claim 2, wherein the boundary value is defined between a neighboring region closer to the ideal value of either characteristic parameter or dimension parameter of parts and a remote region residing in tolerance but apart from the ideal value, and then the parts are classified by the neighboring region and the remote region to deliver the parts to the customer.

4. The parts marketing system according to Claim 1, comprising:

   a database unit for storing distribution data of dimensions or characteristics of each lot, and price and delivery date with respect to delivery parts;
   an input unit for inputting the customer's product specifications and the distribution data of dimensions or characteristics of parts combined by the customer;
   a simulation unit for retrieving required information from the database unit, based on information from the input unit, and for selecting parts lot having optimal distribution data of dimensions or characteristics using a simulator; and
   an output unit for indicating an estimation sheet including the distribution data of dimensions or characteristics, the delivery date and the price with respect to the selected optimal parts lot.

5. The parts marketing system according to Claim 4, wherein the input unit and the output unit are provided in the same workstation unit.

6. The parts marketing system according to Claim 4, wherein in a case of lacking appropriate information in the database unit, acceptable information of the parts lot is registered from a production management unit into the database unit.

7. The parts marketing system according to Claim 4, wherein at least two out of the database unit, the input unit, the simulation unit, the output unit and the production management unit are capable of communicating information through an internet unit with each other.

8. The parts marketing system according to Claim 4, wherein at least two out of the database unit, the input unit, the simulation unit and the output unit are provided in the same machine.

9. The parts marketing system according to Claim 4, wherein the simulator simulates distribution of dimension parameter or characteristic parameter of the delivery parts, based on both of distribution of dimensions or characteristics of the customer's product and distribution data of dimension parameter or characteristic parameter of the parts combined by the customer.

10. The parts marketing system according to Claim 4, wherein the simulator utilizes at least one of Monte Carlo simulation and addition theorem of variance.

11. The parts marketing system according to Claim 1, wherein the parts combined by the customer are optical fibers, and the parts to be designed and sold are at least one of ferrules and sleeves.

12. The parts marketing system according to Claim 1, wherein the characteristic parameter or the dimension parameter of the parts is at least one of concentricity and inner diameter of the ferrule.

13. The parts marketing system according to Claim 1, wherein the classified parts residing in each of the neighboring region and the remote region are baled in a different package, respectively.

14. The parts marketing system according to Claim 13, wherein the different package has a different color of a package case.

## Fig. 1

**3** WORKSTATION UNIT

**INPUT UNIT** **1**

PRODUCT SPEC.

CUSTOMER PARTS DATA

**DATABASE UNIT** **5**

PARTS A DATA

PARTS B DATA

**SIMULATION UNIT** **4**

**OUTPUT UNIT** **2**

LOT NO.

PARTS DATA

PRICE, DELIVERY DATA

**PRODUCTION MANAGEMENT UNIT** **6**

**INPUT UNIT** **8**

ORDERING DATA

Fig. 2

## Fig. 3

## Fig. 4

Fig. 5

# Fig. 6

**A**

**B**

Fig. 7

A

B

Fig. 8

| DATA No. | DATA |
|:---:|:---:|
| 1 | X1 |
| 2 | X2 |
| 3 | X3 |
| 4 | X4 |
| . | . |
| . | . |
| . | . |
| i | Xi |
| . | . |
| . | . |
| n | Xn |

EXTRACTING ONE DATUM BY
GENERATING RANDOM NUMBER

# Fig. 9

δ °

EXTRACTING ANGLE DATA BY
GENERATING RANDOM NUMBER

Fig. 10

# Fig. 11

**A**

RATE OF OCCURRENCE

F

G

0     g     1.4

NEIGHBORING
REGION 10a     REMOTE
REGION 10b

DIMENSION ($\mu$m)

**B**

RATE OF OCCURRENCE

I

H     J

125.5     i   h   j     126.5

REMOTE
REGION 10b     NEIGHBORING
REGION 10a     REMOTE
REGION 10b

DIMENSION ($\mu$m)

## Fig. 12

# Fig. 13

(Prior Art)

# Fig. 14

(Prior Art)

```
                                        ┌──62                    ┌──61
                    ┌──────────────────────┐      ┌──────────────────────┐
                    │ PRODUCT TYPE         │◄─────│ CUSTOMER'S           │
            ┌───────│ DECISION UNIT        │      │ REQUEST SPEC.        │
            │       └──────────────────────┘      │ DATA STORAGE UNIT    │
            │                   │                  └──────────────────────┘
            │                   ▼      ┌──63                    │
            │       ┌──────────────────────┐                   │
            │   ┌──►│ PRUDUCT              │◄──────────────────┘
            │   │   │ PARAMETER            │
            │   │   │ CALCULATION UNIT     │
    ┌──65   │   │   └──────────────────────┘
    │       │   │               │
┌──────────────────┐           ▼       ┌──64
│ PRODUCT MODEL    │   ┌──────────────────────┐
│ DATA STORAGE UNIT│◄──│ UNDEFINED SPEC.      │
└──────────────────┘   │ CALCULATION          │
        │              │ UNIT                 │
        │              └──────────────────────┘
        │                       │       ┌──66
 ┌──67  │                       ▼
 │      │              ┌──────────────────────┐
 │      └─────────────►│ PARTS DATA           │
┌──────────────────┐   │ MATCHING UNIT        │───────────┐
│ PRATS DATA       │──►│                      │           │
│ STORAGE UNIT     │   └──────────────────────┘           │
└──────────────────┘           │       ┌──68              │
 ┌──69                         ▼                  ┌──70   │
┌──────────────────┐   ┌──────────────────────┐  ┌──────────────────┐
│ PRODUCTION       │   │ PRODUCTION INFO.     │  │ COMMERCIAL       │
│ STATUS DATA      │──►│ MATCHING UNIT        │◄►│ PRODUCT MODEL    │
│ STORAGE UNIT     │   │                      │  │ DATA STORAGE UNIT│
└──────────────────┘   └──────────────────────┘  └──────────────────┘
                               │       ┌──71              │
                               ▼                          │
                       ┌──────────────────────┐           │
                       │ 3-D DISPLAY UNIT     │◄──────────┘
                       └──────────────────────┘
```

## Fig. 15

(Prior Art)

COLLABORATION SERVER **83**

PLAN MODIFICATION INFO. UNIT
PLAN TRANSMITTER-RECEIVER UNIT

COMMUNICATION SUPPORTING UNIT
· CHAT
· VOICE DIALOGUE

PLAN STATUS MAINTAINING UNIT

ADVISER

PLAN RENDERING SERVER **82**

PLAN RENDERING UNIT
PLAN COMPILING UNIT

INTERNET

DATABASE SERVER **81**

RETRIEVING PROGRAM

PARTS, PARTS PRODUCT INFO.

DESIGN INFO.

A COMPANY
B COMPANY
COMPANY

INQUIRER

## INTERNATIONAL SEARCH REPORT

| | International application No. |
|---|---|
| | PCT/JP2004/015839 |

A.  CLASSIFICATION OF SUBJECT MATTER
    Int.Cl⁷  G06F17/60

According to International Patent Classification (IPC) or to both national classification and IPC

B.  FIELDS SEARCHED

Minimum documentation searched (classification system followed by classification symbols)
    Int.Cl⁷  G06F17/60

Documentation searched other than minimum documentation to the extent that such documents are included in the fields searched
    Jitsuyo Shinan Koho        1922–1996    Toroku Jitsuyo Shinan Koho    1994–2004
    Kokai Jitsuyo Shinan Koho  1971–2004    Jitsuyo Shinan Toroku Koho    1996–2004

Electronic data base consulted during the international search (name of data base and, where practicable, search terms used)
    JICST FILE(JOIS), WPI, INSPEC(DIALOG)

C.  DOCUMENTS CONSIDERED TO BE RELEVANT

| Category* | Citation of document, with indication, where appropriate, of the relevant passages | Relevant to claim No. |
|---|---|---|
| A | JP 2001-014021 A  (Hitachi, Ltd.), 19 January, 2001 (19.01.01), (Family: none) | 1–14 |
| A | JP 2001-34657 A  (Olympus Optical Co., Ltd.), 09 February, 2001 (09.02.01), (Family: none) | 1–14 |
| A | JP 4-077861 A  (Hitachi, Ltd.), 11 March, 1992 (11.03.92), (Family: none) | 1–14 |
| A | JP 2001-195438 A  (Matsushita Electric Works, Ltd.), 19 July, 2001 (19.07.01), (Family: none) | 1–14 |

| ☒ Further documents are listed in the continuation of Box C. | ☐ See patent family annex. |
|---|---|

| *  Special categories of cited documents: | "T" later document published after the international filing date or priority date and not in conflict with the application but cited to understand the principle or theory underlying the invention |
|---|---|
| "A"  document defining the general state of the art which is not considered to be of particular relevance | |
| "E"  earlier application or patent but published on or after the international filing date | "X" document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&" document member of the same patent family |

| Date of the actual completion of the international search | Date of mailing of the international search report |
|---|---|
| 21 December, 2004 (21.12.04) | 18 January, 2005 (18.01.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

34

**INTERNATIONAL SEARCH REPORT**

| International application No. |
| --- |
| PCT/JP2004/015839 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2003-221275 A (Kyocera Corp.), 05 August, 2003 (05.08.03), (Family: none) | 1-14 |

Form PCT/ISA/210 (continuation of second sheet) (January 2004)